# EUROPEAN PATENT SPECIFICATION

(11) **EP 2 418 400 B1**
(45) Date of publication and mention of the grant of the patent: **06.11.2013**
(21) Application number: 11006393.0
(22) Date of filing: 03.08.2011
(51) Int. Cl.: F16H 1/06, B01F 7/00, F16H 57/021

(54) **Speed reducing device**
Geschwindigkeitsreduktionsvorrichtung
Dispositif de réduction de la vitesse

(30) Priority: 11.08.2010 JP 2010180499; 20.06.2011 JP 2011136401
(43) Date of publication of application: 15.02.2012
(73) Proprietor: Sumitomo Heavy Industries, Ltd., Tokyo 141-6025 (JP)
(72) Inventor: Yamamoto, Akira, Obu-shi Aichi 474-8501 (JP)
(74) Representative: Schmidbauer, Andreas Konrad

(56) References cited:
- WO-A1-95/01517
- JP-A- 60 208 633
- US-A- 2 218 275
- US-A- 3 403 571
- US-A1- 2007 140 054

## Description

Priorities are claimed to Japanese Patent Application No. 2010-180499, filed August 11, 2010, and Japanese Patent Application No. 2011-136401, filed June 20, 2011.

The present invention relates to a speed reducing device, and particularly, to a speed reducing device to which a thrust load is applied from a shaft of a counterpart machine.

Japanese Utility Model Application Publication No. 61-040343 discloses a stirring device of which a stirring shaft is connected to a geared motor (a motor attachment speed reducing device).

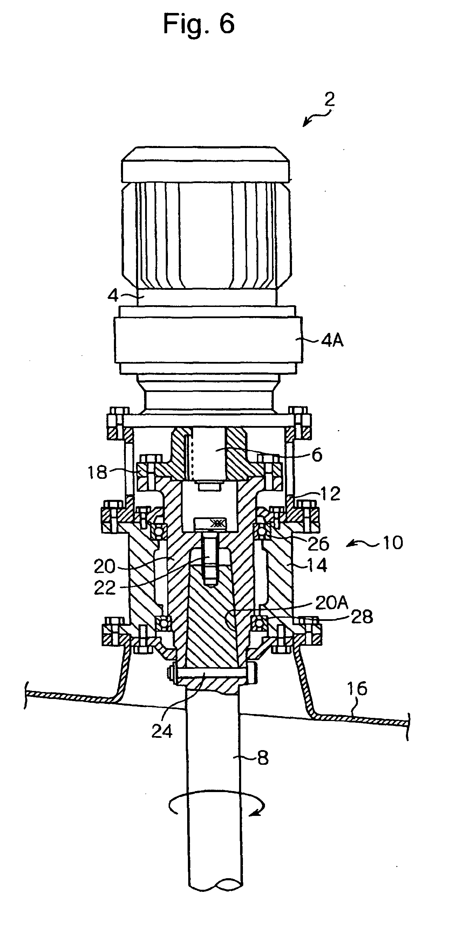

As shown in Fig. 6, in a stirring device 2 disclosed in Japanese Utility Model Application Publication No. 61-040343, a connection mechanism 10, which may receive a thrust load, is disposed between an output shaft 6 of a speed reducing motor (a geared motor) 4 and a stirring shaft (a shaft of a counterpart machine) 8.

The connection mechanism 10 is configured to be connected to the stirring shaft 8, an intermediate shaft 20, a joint 18, and the output shaft 6 of the speed reducing motor 4 (as four casing members) inside a tank 16 of the stirring device 2, a bearing housing 14, a motor base 12, and a casing 4A of the speed reducing motor 4 (as four casing members).

The stirring shaft 8 is inserted into a concave portion 20A of the intermediate shaft 20, and is connected to the intermediate shaft 20 through a fastening bolt 22 and a fastening pin 24. The thrust load transmitted from the stirring shaft 8 is received by the bearing housing 14 of the connection mechanism 10 through a pair of bearings 26 and 28 supporting the intermediate shaft 20.

Further, reference is made to the closest prior art JP 60 208 633 A, showing a coupling structure between an input shaft of a reduction gear and its output shaft.

There is a need for providing a speed reducing device of which one end side of an output shaft is received in a casing of the speed reducing device and the other end side of the output shaft is connected to a shaft of a counterpart machine to which a thrust load is applied, the speed reducing device receiving the thrust load from the shaft of the counterpart machine with a small number of components and a simple configuration.

According to an embodiment of the invention, there is provided a speed reducing device as set forth in claim 1. Further embodiments are claimed in the dependent claims. In particular, in the speed reducing device one end side of an output shaft is received in a casing of the speed reducing device and the other end side of the output shaft is connected to a shaft of a counterpart machine to which a thrust load is applied, the speed reducing device including: a bearing that directly supports the output shaft to be rotatable and receives a thrust load applied to the output shaft; a hollow body that includes a hollow portion and rotates along with the output shaft; and a connection member that is inserted into the hollow portion of the hollow body to be connected to the hollow body and the shaft of the counterpart machine, wherein the bearing receives the thrust load applied from the shaft of the counterpart machine to the output shaft through the connection member.

Fig. 1 is a cross-sectional view illustrating a main configuration of a speed reducing device which is an example of one embodiment of the invention.

Fig. 2 is a partially enlarged cross-sectional view illustrating a configuration near a connection shaft of Fig. 1.

Fig. 3 is a cross-sectional view taken along the line III-III indicated by the arrow of Fig. 2.

Fig. 4 is an overall cross-sectional view illustrating a stirring device adopting the speed reducing device according to an example of the embodiment of the invention.

Fig. 5 is a cross-sectional view illustrating a configuration of the speed reducing device according to an example of another embodiment of the invention.

Fig. 6 is a cross-sectional view illustrating an example of an existing speed reducing device.

### DETAILED DESCRIPTION

In general, in a speed reducing device of which an output shaft is largely offset from an input shaft to a degree more than the radial dimension of a motor, the offset output shaft is made to penetrate an opposite counterpart machine side of the casing of the speed reducing device, the output shaft is formed to be hollow, the shaft of the counterpart machine is inserted into the hollow output shaft, and the shaft is coupled to the output shaft in the axial direction, so that a connection mechanism receiving a thrust load may be comparatively easily configured.

However, in the case of the speed reducing device of which one end side of the output shaft is receive in the casing of the speed reducing device, it is very difficult to connect the output shaft and the shaft of the counterpart machine to each other to receive a thrust load. For this reason, consequently, the connection mechanism connecting the speed reducing device and the shaft of the counterpart machine to each other has problems in that the number of components is large and the structure is complex as in the example of Japanese Utility Model Application Publication No. 61-040343.

In the embodiment of the invention, it is found that the above-described problem is largely involved with the basic configuration in which the connection mechanism capable of receiving the thrust load is disposed between the speed reducing device and the shaft of the counterpart machine, and the above-described problem is solved by drastically re-examining the basic configuration.

That is, the existing connection mechanism needs to have not only a function of transmitting the rotation (torque) of the output shaft of the speed reducing device to the shaft of the counterpart machine, but also a function of receiving the thrust load from the shaft of the counterpart machine (a function of not transmitting the thrust load to the speed reducing device). It is considered that the structure of the connection mechanism becomes complex due to the demand in which the "connection mechanism with two functions is disposed between the speed reducing device and the counterpart machine".

From this view point, in the embodiment of the invention, (at least one) bearing directly supporting the output shaft (to be described later in detail) is set to a bearing capable of receiving the thrust load, and the connection member is made to be inserted into the hollow portion of the hollow body rotating along with the output shaft. The connection member is configured to be connected to the hollow body and the shaft of the counterpart machine.

With this configuration, in the embodiment of the invention, since the high rigidity of the casing of the speed reducing device may be reasonably used, there is a no need to dispose a connection mechanism receiving a thrust load between the speed reducing device and the shaft of the counterpart machine. For this reason, the overall configuration may be remarkably simplified.

According to the embodiment of the invention, a speed reducing device may be simply obtained which receives a thrust load from a shaft of a counterpart machine with a small number of components by adopting a configuration in which one end side of an output shaft is received in a casing of the speed reducing device.

Hereinafter, an example of an embodiment of the invention will be described in detail with reference to the drawings.

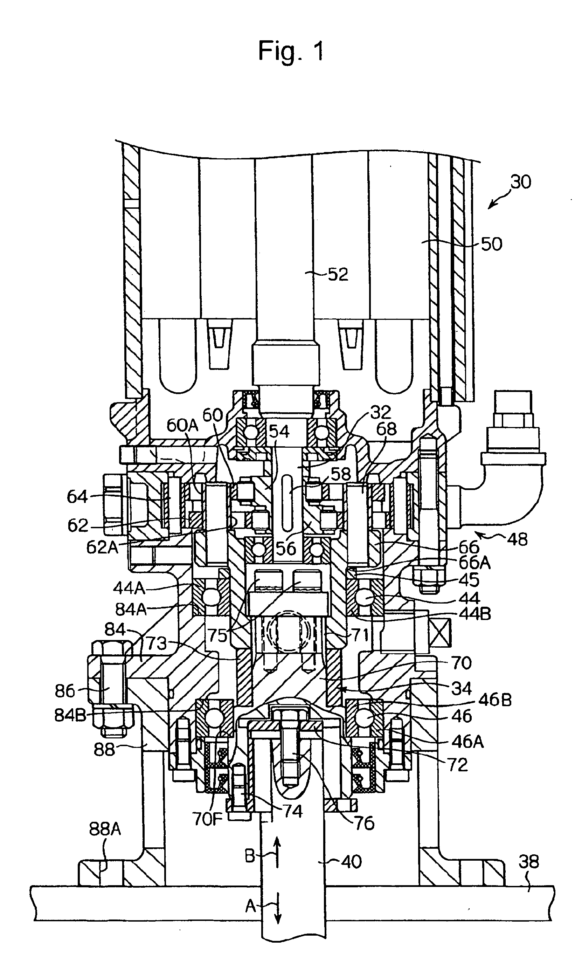

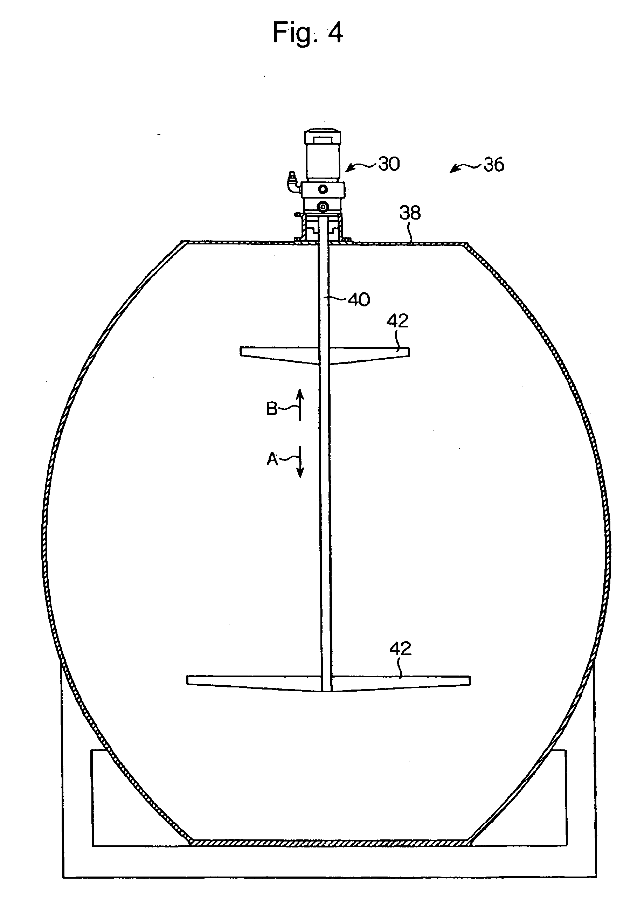

Fig. 4 is an overall cross-sectional view illustrating a stirring device adopting a speed reducing device according to an example of the embodiment of the invention, and Fig. 1 is a cross-sectional view illustrating a main configuration of the speed reducing device.

As shown in Figs. 4 and 1, a speed reducing device 30 is an inline-type speed reducing device of which an input shaft 32 and an output shaft 34 are coaxially disposed. In the speed reducing device 30, one end side (in this example, the upside) of the output shaft 34 is received in a casing 84 of the speed reducing device 30. The speed reducing device 30 is installed and fixed to an upper portion of a tank 38 of a stirring device 36, and the other end side of the output shaft 34 is connected to a stirring shaft 40 (the shaft of the counterpart machine) of the stirring device 36.

Since the stirring shaft 40 and a stirring blade 42 have corresponding own weight, a thrust load is normally applied to the stirring shaft 40 downward (toward the arrow A) in the perpendicular direction. Further, when a stirring operation is started, since a reaction force is applied from a liquid in the tank 38 to the stirring blade 42, a thrust load may be applied to the stirring shaft 40 upward (toward the arrow B) in the perpendicular direction.

In the embodiment, the thrust load is received by ball bearings 44 and 46 each having a function of a thrust bearing directly supporting the output shaft 34 of the speed reducing device 30. Hereinafter, a configuration of a speed reducing mechanism of the speed reducing device 30 will be sequentially described.

The speed reducing device 30 includes an oscillational internal meshing planetary gear speed reducing mechanism 48.

A motor shaft 52 of a motor 50 also serves as an input shaft 32 of the speed reducing device 30. Eccentric bodies 54 and 56 are fixed to the input shaft 32 through a key 58. External tooth gears 60 and 62 are assembled to the outer peripheries of the eccentric bodies 54 and 56. The external tooth gears 60 and 62 internally mesh with the internal tooth gear 64. The internal tooth gear 64 is integrated with the casing 84 of the speed reducing device 30.

Inner pin holes 60A and 62A are formed in the external tooth gears 60 and 62, and an inner pin 68 fixed to a flange member 66 loosely penetrates the inner pin holes 60A and 62A. The number of teeth of the external tooth gears 60 and 62 is smaller than that of the internal tooth gear 64 by one.

For this reason, when the input shaft 32 (as the motor shaft 52 of the motor 50) of the speed reducing device 30 rotates, the eccentric bodies 54 and 56 rotate, and the external tooth gears 60 and 62 oscillate and internally mesh with the internal tooth gear 64. As a result, whenever the input shaft 32 rotates once so that the external tooth gears 60 and 62 oscillate once, the external tooth gears 60 and 62 are deviated (rotated) by one tooth with respect to (the fixed) internal tooth gear 64. The rotation component is transmitted to the flange member 66 through the inner pin 68, so that a speed is reduced at a speed reduction ratio of 1/ (the number of teeth of the external tooth gear), and a rotation is extracted from a load-side shaft member 70 connected to the flange member 66 while the speed is reduced.

Here, in the invention, the "output shaft" of the speed reducing device is defined as a "member or a group of members of an independently rotatable minimal structure as a member or a group of members constituting a final speed reducing stage". This definition is derived from the point in which the "invention receives the thrust load of the shaft of the counterpart machine through the bearing directly supporting the output shaft as a component of the speed reducing device". That is, the output shaft according to the embodiment of the invention may be formed as a single component (a single member) or a plurality of members connected and fixed to each other through a bolt and the like.

As a group of members constituting the final speed reducing stage of the embodiment, there are the flange member 66, the load-side shaft member 70, and a connection member 72 to be described later. However, here, the "flange member 66 and the load-side shaft member 70" correspond to the "output shaft" according to the embodiment of the invention. This is for the following reason. In the embodiment, since the flange member 66 is supported in the casing 84 only through one ball bearing 44, it is difficult to mention that only the flange member 66 independently rotates and serves as the "output shaft" extracting the output torque of the final speed reducing stage to the shaft of the counterpart machine. On the contrary, when a "group of members" is considered which includes the "flange member 66 and the load-side shaft member 70", the group of members are supported (independently rotate) in the casing 84 of the speed reducing device 30 through a pair of ball bearings 44 and 46, and serve as the "output shaft" extracting the output torque of the final speed reducing stage to the shaft of the counterpart machine. On the other hand, the connection member 72 to be described later is a member that is further connected to the "independently rotating flange member 66 and the load-side shaft member 70", and is not included in the "member with a minimal structure". Therefore, in the embodiment, the "output shaft" according to the embodiment of the invention corresponds to the "flange member 66 and the load-side shaft member 70".

Furthermore, in the embodiment, since the type of the bearing is the "ball bearing", the group of members supported by "two bearings" constitute the output shaft, but even one may be independently and stably rotate, for example, when it is supported by a cross roller bearing. For this reason, the term of the "independently rotatable" according to the embodiment of the invention does not mean that it is essentially supported by a pair of bearings.

Hereinafter, a configuration will be described in detail in which the stirring shaft 40 of the stirring device 36 is supported by the inline-type speed reducing device 30.

The load-side shaft member 70 and the flange member 66 constituting the output shaft 34 of the speed reducing device 30 are connected to each other in the circumferential direction through a spline engagement portion 71, and are connected to each other in the axial direction through a spacer 73 and a bolt

The output shaft 34 is directly supported to the casing 84 of the speed reducing device 30 through a pair of ball bearings 44 and 46. Here, in the opposite-load-side ball bearing 44, the axial load side of an outer race 44A comes into contact with a first step portion 84A of the casing 84 of the speed reducing device 30, and the opposite load side of an inner race 44B comes into contact with a step portion 66A of the flange member 66 (as a part of the output shaft 34) through a spacer ring 45. For this reason, the opposite-load-side ball bearing 44 serves as a thrust bearing that receives a thrust load when a thrust load is applied thereto so that the output shaft 34 moves toward the side of the load (toward the arrow A).

Further, in the load-side ball bearing 46 directly supporting the output shaft 34, the axial opposite load side of the outer race 46A comes into contact with a second step portion 84B of the casing 84, and the axial load side of the inner race 46B (as a part of the output shaft 34) comes into contact with a step portion 70F of the load-side shaft member 70. For this reason, the load-side ball bearing 46 serves as a thrust bearing that receives a thrust load when a thrust load is applied thereto so that the output shaft 34 moves toward the opposite side of the load (toward the arrow B).

Here, a concept of the "hollow body" as one component of the embodiment of the invention will be described. The "hollow body" of the embodiment of the invention indicates a "body that includes a hollow portion having (a connection member inserted thereto) and rotating along with the output shaft". That is, the "hollow body" may be present as a part of the "output shaft" or present separately from the "output shaft". As described above, in the embodiment, the "flange member 66 and the load-side shaft member 70" constitutes the output shaft of the embodiment of the invention, but the "load-side shaft member 70" is also the "hollow body rotating along with the output shaft". In other words, in the embodiment, the "load-side shaft member 70" constituting a part of the output shaft 34 also serves as the hollow body.

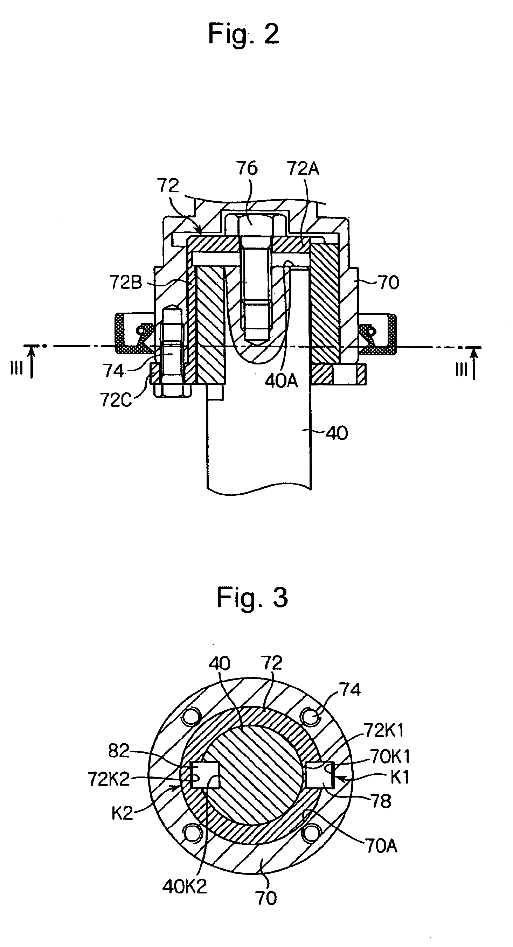

Referring to Figs. 2 and 3, a connection member 72 is inserted into a hollow portion 70A of a load-side shaft member 70 (also serving as the hollow body). The connection member 72 includes a cylindrical portion 72B that is inserted into the hollow portion 70A of the load-side shaft member 70, an upper cover (a protrusion portion) 72A that protrudes from (the axial opposite-load-side end of) the cylindrical portion 72B inward in the radial direction to be connected to the stirring shaft 40, and a ring portion 72C that is fixed to the axial load-side-end of the load-side shaft member 70, and is connectable to the load-side shaft member 70 and the stirring shaft 40. Furthermore, in the embodiment, the ring portion 72C is integrally formed with the cylindrical portion 72B, but may be formed separately from the cylindrical portion 72B and be fixed thereto.

Specifically, the load-side shaft member 70 and the connection member 72 are fixed to each other by a bolt 74 while the ring portion 72C of the connection member 72 comes into contact with the axial end of the load-side shaft member 70. Further, the stirring shaft 40 and the connection member 72 are fixed to each other by a bolt 76 penetrating them while an upper end surface 40A of the stirring shaft 40 and the upper cover 72A of the cylindrical portion 72B of the connection member 72 face each other with a gap therebetween. Furthermore, the gap may not be present (so that they come into contact with each other).

Furthermore, the load-side shaft member 70 and the connection member 72 may be sufficiently fixed to each other and the connection member 72 and the stirring shaft 40 may be sufficiently fixed to each other by the bolts 74 and 76. However, in the embodiment, the bolts 74 and 76 are mainly used for fixing in the axial direction, and a separate fixing member is prepared for fixing in the circumferential direction. That is, the outer periphery of the connection member 72 is provided with a first key engagement portion K1 that includes a key 78 and key grooves 70K1 and 70K2 used for the connection member 72 to receive rotational torque from the load-side shaft member 70, and the connection member 72 and the load-side shaft member 70 are connected to each other in the circumferential direction through the first key engagement portion K1. Further, the inner periphery of the connection member 72 is provided with a second key engagement portion K2 that includes a key 82 and key grooves 72K2 and 40K2 used for the connection member 72 to transmit the rotational torque to the stirring shaft 40, and the connection member 72 and the stirring shaft 40 are connected to each other in the circumferential direction through the second key engagement portion K2. Furthermore, as shown in Fig. 3, the first key engagement portion K1 and the second key engagement portion K2 are deviated from each other by 180° in the circumferential direction.

With this configuration, consequently, the connection member 72 is inserted into the hollow portion 70A of the load-side shaft member 70 to be connected to the load-side shaft member 70 in both axial and circumferential directions and be also connected to the stirring shaft 40 in both axial and circumferential directions.

Furthermore, returning to Fig. 1, the casing 84 of the speed reducing device 30 is connected to a connection casing 88 through a bolt 86, and is connected to the tank 38 of the stirring device 36 in a manner such that a bolt (not shown) is inserted into a bolt hole 88A of the connection casing 88.

Next, an operation of the inline-type speed reducing device 30 will be described.

The low-speed rotation (of the final speed reducing stage) extracted from the flange member 66 (as a part of the output shaft 34) is transmitted to the load-side shaft member 70 (as a part of the output shaft 34 and the hollow body) through the bolt 75. The load-side shaft member 70 is connected to the connection member 72 in the axial direction through the bolt 74, and is connected thereto in the circumferential direction through the first key engagement portion K1. Further, the connection member 72 is connected to the stirring shaft 40 in the axial direction through the bolt 76, and is connected thereto in the circumferential direction through the second key engagement portion K2. For this reason, consequently, the stirring shaft 40 is coaxially integrated with the output shaft 34 in the circumferential and axial directions, rotates along with the output shaft 34 at the same speed, and may stir a liquid inside the tank 38. Since the first key engagement portion K1 and the second key engagement portion K2 are deviated from each other by 180° in the circumferential direction, excessive rotational torque does not occur only at a part of the connection member 72 in the circumferential direction, and durability of the connection member 72 may improve.

When the own weight of the stirring shaft 40, that is, the thrust load of moving the output shaft 34 toward the load (toward the arrow A) is applied to the output shaft 34, the step portion 66A of the flange member 66 comes into contact with the axial opposite load side of the inner race 44B of the opposite-load-side ball bearing 44 through the spacer ring 45, and at the same time, the axial load side of the outer race 44A of the ball bearing 44 comes into contact with the first step portion 84A of the casing 84. Accordingly, the thrust load applied toward the load is received by the casing 84. Further, when a stirring reaction force is applied to the stirring shaft 40, so that a thrust load is applied to the output shaft 34 to raise the stirring shaft 40 and moves the output shaft 34 toward the opposite side of the load (toward the arrow B), the step portion 70F of the load-side shaft member 70 comes into contact with the axial load side of the inner race 46B of the load-side ball bearing 46, and at the same time, the axial opposite load side of the outer race 46A of the ball bearing 46 comes into contact with the second step portion 84B of the casing 84. Accordingly, the thrust load applied toward the opposite side of the load is also received by the casing 84.

Since the speed reducing device 30 according to the embodiment has a configuration in which the input shaft 32, the planetary gear speed reducing mechanism 48, the output shaft 34, and the stirring shaft 40 are all coaxially disposed (as an inline) , the overall radial dimension of the device is compact, and the axial rigidity of the casing 84 is high. For this reason, the thrust load transmitted from the stirring shaft 40 may be sufficiently received by the casing. That is, it is not necessary to change a design so that the thickness of the casing 84 of the speed reducing device 30 is intentionally increased in order to receive the reaction force against the thrust load, and even when the thickness needs to be increased, the thickness may be minimally increased.

At the time of assembling the connection member 72 and the stirring shaft 40, only the axis of the output shaft 34 with respect to the casing 84 is a base and the coaxial degree between the output shaft 34 and the stirring shaft 40 is included in the level of the manufacturing error of the connection member 72 and the stirring shaft 40, so that extremely high precision may be maintained. The assembly is extremely simple, and no particular effort or skill is needed to ensure the precision of the axis of the output shaft 34, the connection member 72, and the stirring shaft 40. Further, the number of components such as a bearing may be decreased.

Furthermore, in the embodiment, the load-side shaft member 70 and the flange member 66 constituting the output shaft 34 are formed as separate members, and the load-side shaft member 70 constitutes a part of the output shaft 34 and also serves as the hollow body. Accordingly, when the load-side shaft member 70 is changed into a shape matching the size of (another) stirring shaft, the shafts of various counterpart machines (other than that of the embodiment) may be flexibly handled. Further, when the load-side shaft member 70 is replaced by, for example, a general solid shaft, a general speed reducing device (instead of a type of receiving such a thrust load) may be easily configured. Further, since the load-side shaft member 70 serves as the output shaft 34 and the hollow body, it is possible to prevent an increase in the number of components.

Furthermore, in the embodiment of the invention, various variations may occur from this point.

First, in the above-described embodiment, since the load-side shaft member 70 and the flange member 66 constituting the output shaft 34 are separately formed (as separate members) , the flexibility of the application of the speed reducing device 30 may be ensured. However, in the invention, the output shaft may also be formed as a single member. In this case, the number of components may be further decreased, and the overall speed reducing device 30 may be further decreased in size. Further, since the manufacturing errors of the plurality of members are not accumulated compared to the case where a plurality of members constitutes the output shaft, naturally, the axis of the output shaft becomes stable, so that the assembly precision of the shaft of the counterpart machine may further improve.

Further, in the above-described embodiment, although the connection member 72 includes the cylindrical portion 72B that is inserted into the load-side shaft member 70 (as the hollow body), the upper cover (protrusion portion) 72A that protrudes from the cylindrical portion 72B inward in the radial direction to be connected to the stirring shaft 40, and the ring portion 72C that is fixed to the axial end of the load-side shaft member 70, in the invention, the specific shape or configuration of the connection member is not limited to this example. That is, the connection member may be connected to the hollow body and the shaft of the counterpart machine when being inserted into the hollow portion of the hollow body. For example, the connection may be performed in a manner such that a bolt or a pin member penetrates a part (the cylindrical portion 72B and the like) of the connection member in the radial direction up to the shaft of the counterpart machine. Further, in the above-described embodiment, the connection member 72 is attached with the upper cover 72A, and the upper cover 72A serves as the "protrusion portion" of the connection member 72. That is, the "protrusion portion" may be connected to the shaft of the counterpart machine when protruding from the cylindrical portion 72B inward in the radial direction, and may not necessarily be formed in the form of a "cover" or a "bottom" at the "end" of the cylindrical portion.

Further, in the above-described embodiment, the connection member 72 and the load-side shaft member 70 (as the hollow body) are fixed to each other and the stirring shaft 40 (the shaft of the counterpart machine) and the connection member 72 are fixed to each other by simultaneously performing the "connection in the circumferential direction using the key engagement" and the "connection in the axial direction using the bolt", but this connection method is not essentially limited to this example. For example, regarding the connection in the circumferential direction between the hollow body and the connection member or the connection member and the shaft of the counterpart machine, the first and second engagement portions may be formed as a spline. Further, the connection in the circumferential direction may be performed by forming the inner and outer peripheries of the hollow body or the connection member to have a cross-sectional shape (for example, a rectangular cross-section or a so-called D-cut cross-section obtained by cutting a part of the circumference) other than a circle. Further, even in the case of the key engagement, the circumferential phases of the first key engagement portion and the second key engagement portion may not necessarily be 180°. Further, for example, as in the key engagement, the spline engagement, or the key engagement and the bolt engagement, the first engagement portion and the second engagement portion may be formed as different types of engagement members. Further, in the above-described embodiment, different connection members are simultaneously used in the circumferential and axial directions. However, for example, in a connection member using a bolt and the like, the circumferential and connection in the axial directions may be simultaneously performed.

Further, in the invention, the configuration of the specific speed reducing mechanism of the speed reducing device is not particularly limited. For example, in the above-described embodiment, the oscillational internal meshing planetary gear speed reducing mechanism 48 is adopted in which the eccentric bodies 54 and 56 are disposed at the outer periphery of the input shaft 32 disposed at the center of the speed reducing device 30 in the radial direction in order to configure the inline-type speed reducing device in which the output shaft 34 is coaxial with the input shaft 32. However, a speed reducing device with a oscillational internal meshing planetary gear speed reducing mechanism may be adopted in which the eccentric body is disposed at the shaft offset from the center of the speed reducing device in the radial direction. Further, a speed reducing device with a simple planetary gear speed reducing mechanism may be adopted. When the speed reducing device according to the embodiment of the invention is configured as an inline-type, the hollow body rotating along with the output shaft is provided, and a design may be easily provided in which various types of output shafts of various speed reducing mechanisms reasonably receive a thrust load of a shaft of a counterpart machine with a decreased size due to the design of the hollow body.

Furthermore, the speed reducing device according to the embodiment of the invention is not essentially limited to the inline-type speed reducing device in which the input shaft and the output shaft are coaxially disposed, and the assembled speed reducing mechanism may not be the inline-type speed reducing mechanism.

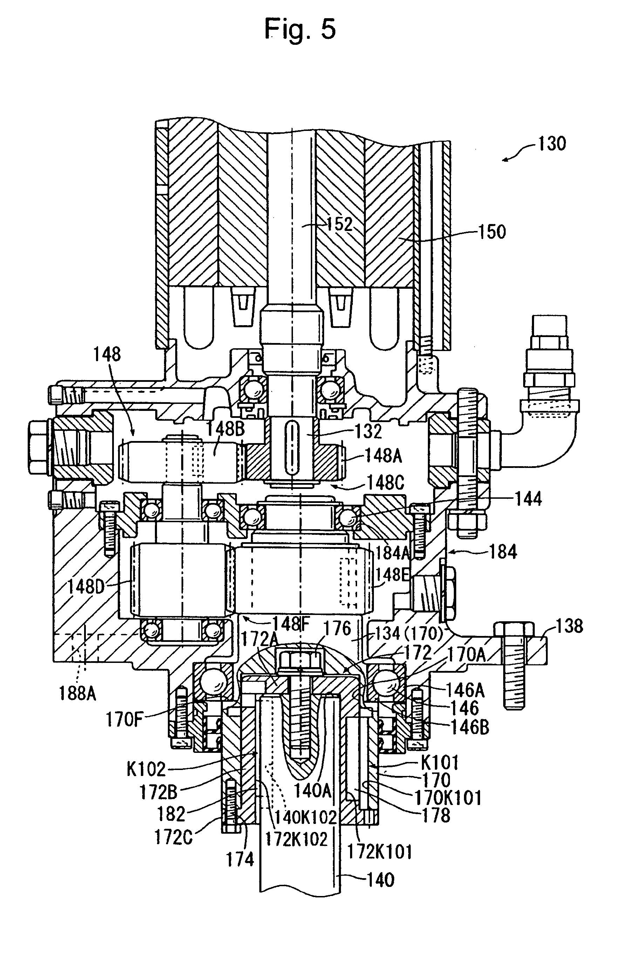

Hereinafter, a speed reducing device 130 according to such a configuration example will be described by referring to Fig. 5.

The speed reducing device 130 also has a configuration in which one end side of an output shaft 134 is received in a casing 184 of the speed reducing device 130 and the other end side of the output shaft 134 is connected to a stirring shaft (a shaft of a counterpart machine) to receive a thrust load applied from the stirring shaft through the output shaft 134.

An output shaft 152 of a motor 150 also serves as an input shaft 132 of the speed reducing device 130. The power input to the input shaft 132 is reduced by a speed reducing mechanism 148 configured as two-stage parallel speed reducing mechanism. The speed reducing mechanism 148 includes a first parallel shaft speed reducing stage 148C including a first pinion 148A and a first gear 148B, and a second parallel shaft speed reducing stage 148F including a second pinion 148D and a second gear 148E.

Regarding a configuration in which the output shaft 134 and the stirring shaft 140 as the shaft of the counterpart machine are connected to each other through a connection member 172 to receive a thrust load, in the above-described embodiment, the output shaft 34 includes the flange member 66 and the load-side shaft member 70, but the embodiment is different from the above-described embodiment in that the output shaft 134 formed as a single member is adopted. The other configurations are the same as those of the above-described embodiment. For this reason, in Fig. 5, the same reference numeral with the same last two digits is given to the member which is the same or similar to that of the above-described embodiment in function.

That is, even in the embodiment, bearings 144 and 146 are provided which are capable of directly supporting the output shaft 134 to be rotatable and receiving a thrust load applied to the output shaft 134. Then, the output shaft 134 also serves as the "hollow body including the hollow portion 170A and rotating along with the output shaft 134" (this point is the same as that of the above-described embodiment). Further, the embodiment is the same as that of the above-described embodiment in that the connection member 172 is inserted into the hollow portion 170A to be coaxially connected to the output shaft 134 as the hollow body and be coaxially connected to the stirring shaft 140, and the thrust load applied from the stirring shaft 140 to the output shaft 134 through the connection member 172 is received by the bearings 144 and 146.

The speed reducing device 130 is the "speed reducing device of which one end side of the output shaft 134 is received in the casing 184 of the speed reducing device 130 and the other end side of the output shaft 134 is connected to the stirring shaft 140 to which the thrust load is applied", and as described above, the speed reducing device has a basic structure in which the design of the connection structure is very difficult. However, in the invention, the speed reducing device 130 with such a structure may be embodied without causing any problem, and the original operation and effect of the invention may be obtained.

As described above, the invention may be applied to any type of a speed reducing mechanism when a speed reducing device is provided of which one end side of an output shaft is received in a casing of the speed reducing device and the other end side of the output shaft is connected to a shaft of a counterpart machine to which a thrust load is applied.

Here, the other end side of the output shaft may be disposed in an opening of the casing so as to be connected to the shaft of the counterpart machine, and may not protrude from the casing in the axial direction.

According to the embodiment, although the cheap first and second parallel shaft speed reducing stages 148C and 148F are used in the speed reducing mechanism 148, since the input shaft 132 and the output shaft 134 are not largely offset from each other, there is a practical merit in that the radial size of the speed reducing device 130 may be decreased.

Furthermore, in the above-described embodiment, the pair of ball bearings 44 (144) and 46 (146) directly supporting the output shaft 34 (134) is configured to receive the thrust load from the stirring shaft 40 (140), but the invention may not have a configuration in which all bearings directly supporting the output shaft receive the thrust load from the shaft of the counterpart machine. For example, in the above-described embodiment, when a stirring reaction force applied from a liquid is not large and the output shaft 34 (134) receives only the thrust load in the direction depicted by the arrow A, only one bearing may receive the thrust load, and the other bearing (not receiving the thrust load) may be formed as a general bearing. In this case, any one of the load-side and the opposite-load-side bearing may receive the thrust load in any direction.

The invention is particularly effective in a structure in which the output shaft of the speed reducer of the above-described embodiment is disposed downward so that the shaft of the counterpart machine is hung thereon, but the invention is not limited thereto. For example, the invention may be applied to a case where the output shaft of the speed reducer is disposed in, for example, the horizontal direction instead of the downward direction. In this case, the connection between the hollow body and the connection shaft and the connection between the connection shaft and the shaft of the counterpart machine may be performed by at least the engagement in the rotational direction, and fixing in the axial direction is not essential.

The invention is not limited to the stirring device, but may be widely applied to a device in which a thrust load is applied from a shaft of a counterpart machine to an output shaft. For example, the invention may be applied to an extruder.

It should be understood that the invention is not limited to the above-described embodiment, but may be modified into various forms on the basis of the spirit of the invention. Additionally, the modifications are included in the scope of the invention.

## Claims

1. A speed reducing device (30; 130) of which one end side of an output shaft (34; 134) is received in a casing (84; 184) of the speed reducing device (30; 130) and the other end side of the output shaft (34; 134) is connected to a shaft (40; 140) of a counterpart machine (36) to which a thrust load is applied, the speed reducing device (30; 130) being configured to reduce rotation of an input shaft (32; 132) to transmit the reduced rotation to the output shaft (34 ; 134), the speed reducing device comprising:
a bearing (44, 46; 144, 146) that directly supports the output shaft (34; 134) to be rotatable and receives a thrust load applied to the output shaft (34; 134);
a hollow body (70; 170) that includes a hollow portion (70A; 170A) and rotates along with the output shaft (34; 134) ; and
a connection member (72; 172) that has a cylindrical portion (72B), the cylindrical portion (72B) being inserted into the hollow portion (70A; 170A) of the hollow body (70; 170) to be connected to the hollow body (70; 170) and the shaft (40; 140) of the counterpart machine (36), and a ring portion (72C) fixed to the axial end of the hollow body (70; 170), the ring portion (72C) being at the end of the cylindrical portion (72B),
wherein the bearing (44, 46; 144, 146) receives the thrust load applied from the shaft (40; 140) of the counterpart machine (36) to the output shaft (34; 134) through the connection member (72; 172).

2. The speed reducing device (30; 130) according to claim 1, wherein the input shaft (32 ; 132) and the output shaft (34 ; 134) are coaxially disposed.

3. The speed reducing device (30; 130) according to claim 1,
wherein the connection member (72; 172) further includes a protrusion portion (72A) protruding from the cylindrical portion (72B) inward in the radial direction to be connected to the shaft (40; 140) of the counterpart machine (36).

4. The speed reducing device (30) according to claim 1,
wherein the outer periphery of the cylindrical portion (72A) of the connection member (72; 172) is provided with a first engagement portion where the connection member receives rotational torque from the hollow body (70; 170), and
wherein the inner periphery of the cylindrical portion (72A) is provided with a second engagement portion transmitting the rotational torque received from the hollow body (70; 170) to the shaft (40; 140) of the counterpart machine (36).

5. The speed reducing device (30) according to claim 4,
wherein the first and second engagement portions include a key and a key groove, and are deviated from each other by 1800 ° in the circumferential direction.

6. The speed reducing device (30) according to claim 4,
wherein the first and second engagement portions are formed as a spline.

7. The speed reducing device (30) according to claim 1,
wherein the output shaft (34 ; 134) and the hollow body (70; 170) are respectively formed as separate members.

8. The speed reducing device (30) according to claim 1,
wherein a part of the output shaft (34 ; 134) is integrated with the hollow body (70; 170).

## Patentansprüche

1. Drehzahluntersetzungsvorrichtung (30; 130), bei der eine Seite einer Ausgangswelle (34; 134) in einem Gehäuse (84; 184) der Drehzahluntersetzungsvorrichtung (30; 130) aufgenommen ist, und bei der die anderen Endseite der Ausgangswelle (34; 134) mit einer Welle (40; 140) einer angeschlossenen Maschine (36) verbunden ist, auf die eine Axiallast aufgebracht ist, wobei die Drehzahluntersetzungsvorrichtung (30; 130) konfiguriert ist, um eine Drehung einer Eingangswelle (32; 132) zu untersetzen, um die untersetzte Drehung an die Ausgangswelle (34; 134) zu übertragen, wobei die Drehzahluntersetzungsvorrichtung Folgendes aufweist:
ein Lager (44, 46; 144, 146), welches direkt die Ausgangswelle (34; 134) trägt, so dass diese drehbar ist, und welches eine Schublast bzw. Axiallast aufnimmt, die auf die Ausgangswelle (34; 134) aufgebracht ist;
einen hohlen Körper (70; 170), der einen hohlen Teil (70A; 170A) aufweist und sich zusammen mit der Ausgangswelle (34; 134) dreht; und
ein Verbindungsglied (72; 172), welches einen zylindrischen Teil (72B) hat, wobei der zylindrische Teil (72B) in den hohlen Teil (70A; 170A) des hohlen Körpers (70; 170) eingesetzt ist, so dass er mit dem hohlen Körper (70; 170) und der Welle (40; 140) der angeschlossenen Maschine (36) verbunden ist, und einen Ringteil (72C), der an dem axialen Ende des hohlen Körpers (70; 170) befestigt ist, wobei der Ringteil (72C) an dem Ende des zylindrischen Teils (72B) ist;
wobei das Lager (44, 46; 144; 146) die Axiallast aufnimmt, welche von der Welle (40; 140) der angeschlossenen Maschine (36) auf die Ausgangswelle (34; 134) durch das Verbindungsglied (72; 172) aufgebracht wird.

2. Drehzahluntersetzungsvorrichtung (30; 130) nach Anspruch 1, wobei die Eingangswelle (32; 132) und die Ausgangswelle (34; 134) koaxial angeordnet sind.

3. Drehzahluntersetzungsvorrichtung (30; 130) nach Anspruch 1, wobei das Verbindungsglied (72; 172) weiter einen Vorsprungsteil (72A) aufweist, der von dem zylindrischen Teil (72B) nach innen in radialer Richtung vorsteht, so dass er mit der Welle (40; 140) der angeschlossenen Maschine (36) verbunden ist.

4. Drehzahluntersetzungsvorrichtung (30) nach Anspruch 1, wobei der Außenumfang des zylindrischen Teils (72A) des Verbindungsgliedes (72; 172) mit einem ersten Eingriffsteil versehen ist, wobei das Verbindungsglieddrehmoment von dem hohlen Körper (70; 170) aufnimmt, und wobei der Innenumfang des zylindrischen Teils (72A) mit einem zweiten Eingriffsteil versehen ist, der das Drehmoment, welches vom hohlen Körper (70; 170) aufgenommen wird, auf die Welle (40, 140) der angeschlossenen Maschine (36) überträgt.

5. Drehzahluntersetzungsvorrichtung (30) nach Anspruch 4, wobei die ersten und zweiten Eingriffsteile eine Feder und eine Federnut aufweisen und voneinander um 180° in Umfangsrichtung getrennt sind.

6. Drehzahluntersetzungsvorrichtung (30) nach Anspruch 4, wobei die ersten und zweiten Eingriffsteile als Keile bzw. Keilwelle ausgeformt sind.

7. Drehzahluntersetzungsvorrichtung (30) nach Anspruch 1, wobei die Ausgangswelle (34; 134) und der hohle Körper (70; 170) jeweils als getrennte Glieder geformt sind.

8. Drehzahluntersetzungsvorrichtung (30) nach Anspruch 1, wobei ein Teil der Ausgangswelle (34; 134) mit dem hohlen Körper (70; 170) integriert ist.

## Revendications

1. Dispositif de réduction de vitesse (30 ; 130) dont un côté d'extrémité d'un arbre de sortie (34 ; 134) est reçu dans un carter (84 ; 184) du dispositif de réduction de vitesse (30 ; 130) et l'autre côté d'extrémité de l'arbre de sortie (34 ; 134) est connecté à un arbre (40 ; 140) d'une machine homologue (36) sur lequel une charge de poussée est appliquée, le dispositif de réduction de vitesse (30 ; 130) étant agencé pour réduire la vitesse de rotation d'un arbre d'entrée (32 ; 132) pour transmettre la rotation à vitesse réduite à l'arbre de sortie (34 ; 134), le dispositif de réduction de vitesse comprenant :
un palier (44, 46 ; 144, 146) qui supporte directement l'arbre de sortie (34 ; 134) pour assurer sa rotation et reçoit une charge de poussée appliquée sur l'arbre de sortie (34 ; 134) ;
un corps creux (70 ; 170) qui comprend une portion creuse (70A ; 170A) et tourne avec l'arbre de sortie (34 ; 134) ; et
un élément de connexion (72 ; 172) qui comporte une portion cylindrique (72B), la portion cylindrique (72B) étant insérée dans la portion creuse (70A ; 170A) du corps creux (70 ; 170) pour être connectée au corps creux (70 ; 170) et à l'arbre (40 ; 140) de la machine homologue (36), et une portion annulaire (72C) fixée à l'extrémité axiale du corps creux (70 ; 170), la portion annulaire (72C) étant au niveau de l'extrémité de la portion cylindrique (72B),
dans lequel le palier (44, 46 ; 144, 146) reçoit la charge de poussée appliquée par l'arbre (40 ; 140) de la machine homologue (36) sur l'arbre de sortie (34 ; 134) par l'intermédiaire de l'élément de connexion (72 ; 172).

2. Dispositif de réduction de vitesse (30 ; 130) selon la revendication 1,
dans lequel l'arbre d'entrée (32 ; 132) et l'arbre de sortie (34 ; 134) sont disposés de façon coaxiale.

3. Dispositif de réduction de vitesse (30 ; 130) selon la revendication 1,
dans lequel l'élément de connexion (72 ; 172) comprend en outre une partie saillante (72A) faisant saillie à partir de la portion cylindrique (72B) vers l'intérieur dans la direction radiale pour être connectée à l'arbre (40 ; 140) de la machine homologue (36).

4. Dispositif de réduction de vitesse (30) selon la revendication 1,
dans lequel la périphérie extérieure de la portion cylindrique (72A) de l'élément de connexion (72 ; 172) est munie d'une première portion d'accouplement dans laquelle l'élément de connexion reçoit le couple de rotation à partir du corps creux (70 ; 170), et
dans lequel la périphérie intérieure de la portion cylindrique (72A) est munie d'une deuxième portion d'accouplement transmettant le couple de rotation reçu du corps creux (70 ; 170) à l'arbre (40 ; 140) de la machine homologue (36).

5. Dispositif de réduction de vitesse (30) selon la revendication 4,
dans lequel les première et deuxième portions d'accouplement comprennent une clavette et une gorge de clavette, et sont écartées entre elles de 180° dans la direction circonférentielle.

6. Dispositif de réduction de vitesse (30) selon la revendication 4,
dans lequel les première et deuxième portions d'accouplement sont cannelées.

7. Dispositif de réduction de vitesse (30) selon la revendication 1, dans lequel l'arbre de sortie (34, 134) et le corps creux (70 ; 170) sont constitués respectivement d'éléments séparés.

8. Dispositif de réduction de vitesse (30) selon la revendication 1,
dans lequel une partie de l'arbre de sortie (34 ; 134) est intégrée avec le corps creux (70 ; 170).
